# EUROPÄISCHE PATENTSCHRIFT

(11) **EP 0 876 450 B1**
(45) Veröffentlichungstag und Bekanntmachung des Hinweises auf die Patenterteilung: **15.03.2000**
(21) Anmeldenummer: 96944069.2
(22) Anmeldetag: 24.12.1996
(51) Int. Cl.: C10M 171/00, C10M 173/00, B01D 19/04, C23F 11/14, C23F 11/16

(54) **VERWENDUNG AlS ANTISCHAUMMITTEL VON ALKALI- UND/ODER TRIETHANOLAMINSALZEN DER ALKANOYLAMINOCARBONSÄUREN IN DER METALLBEARBEITUNG**
USE AS ANTIFOAM AGENT OF ALKALI AND/OR TRIETHANOLAMINE SALTS OF THE ALKANOYL AMINO CARBOXYLIC ACIDS IN METAL WORKING
UTILISATION COMME ANTIMOUSSE DE SELS ALCALINS ET/OU DE SELS DE TRIETHANOLAMINE D'ACIDES ALCANOYLAMI NOCARBOXYLIQUES DANS L'USINAGE DES METAUX

(30) Priorität: 04.01.1996 AT 1096
(43) Veröffentlichungstag der Anmeldung: 11.11.1998
(73) Patentinhaber: Bereuter, Heinz, Dipl.-Ing., A-6971 Hard (AT)
(72) Erfinder: BEREUTER, Heinz, A-6971 Hard (AT); BEREUTER, Thomas, L., A-6971 Hard (AT); BEREUTER, Wolfgang, A-5020 Salzburg (AT); KOHLHAUPT, Ingrid, A-6971 Hard (AT)
(74) Vertreter: Büchel, Kurt F., Dr.
(86) Internationale Anmeldenummer: EP9605837
(87) Internationale Veröffentlichungsnummer: WO9725394

(56) Entgegenhaltungen:
- EP-A- 0 319 942
- EP-A- 0 629 608
- US-A- 4 144 182

## Beschreibung

Die Erfindung betrifft Alkali- und Triethanolaminsalze der Alkanoylaminocarbonsäuren, wie sie aus der AT 344 854 B bzw. der US-A-4 144 182 als Metallbearbeitungsmittel bekannt geworden sind. Danach werden solche Salze bisher als korrosionsinhibierende Kühl- und Metallbearbeitungsmittel verwendet. Die meisten dort angegebenen Salze ergeben bei der Bearbeitung der Werkstücke einen guten bis sehr guten Korrosionsschutz. Sie zeigen jedoch in modernen Hochleistungs-Metallbearbeitungszentren, bedingt durch den hohen Kühlschmiermittelumlauf und den hohen Förderdruck ein unerwünscht starkes Schäumen. Der Zusatz handelsüblicher Entschäumer bringt dabei nur teilweise und vor allem jeweils nur kurzzeitig eine Verbesserung, hingegen gelegentlich unerwünschte Nebenwirkungen.

Die Erfindung hat sich daher die Aufgabe gestellt, solche Salze auszuwählen, die ein den Anforderungen moderner NC-Maschinen genügendes und dauerhaft geringes Schaumverhalten zeigen. Dies bieten in überraschender Weise Alkali- und/oder Triethanolaminsalze von Alkanoylaminocarbonsäuren der allgemeinen Formel 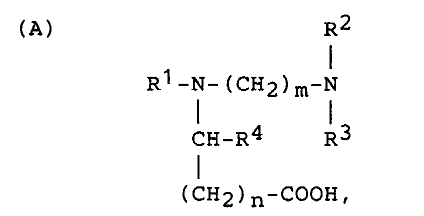 worin:
R¹ einen Alkanoyl- oder einen Alkylsulfonylrest mit jeweils 6 bis 20 Kohlenstoffatomen;
R² das Radikal 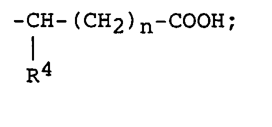
R³ das Radikal R² oder 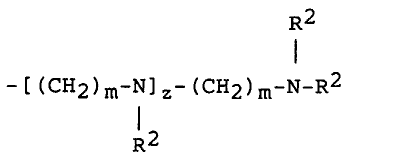
R⁴ ein H;
m = 2;
n = 0 oder 1, und
z eine ganze Zahl von 0 bis 2 bedeuten,
in einer Menge von mindestens 5, vorzugsweise mindestens 30, insbesondere 50 Gewichtsprozent des Konzentrates korrosionsinhibierender Metallbearbeitungsmittel in wässriger Lösung, als Antischaummittel.

Zu ihnen gehören fast ausschliesslich Salze von Monoalkanoylethylendiamin-tri-essig- oder -propionsäuren, Monoalkanoyldiethylentriamin-tetra-essig- oder -propionsäuren, Monoalkanoyl-triethylentetramin-penta-essig- oder -propionsäuren, bzw. Monoalkanoyl-tetraethylenpentamin-hexa-essig- oder -propionsäuren, und zwar:
1. N-caproyl-ethylendiamin-N,N',N'-triessigsäure
2. N-caproyl-ethylendiamin-N,N',N'-tripropionsäure
3. N-isooctanoyl-ethylendiamin-N,N',N'-triessigsäure
4. N-isooctanoyl-ethylendiamin-N,N',N'-tripropionsäure
5. N-isononanoyl-ethylendiamin-N,N',N'-triessigsäure
6. N-isononanoyl-ethylendiamin-N,N',N'-tripropionsäure
7. N-isononanoyl-diethylentriamin-N,N',N",N"-tetraessigsäure
8. N-isononanoyl-diethylentriamin-N,N',N",N"-tetrapropionsäure
9. N-decanoyl-ethylendiamin-N,N',N'-triessigsäure
10. N-decanoyl-ethylenddiamin-N,N',N'-tripropionsäure
11. N-undecanoyl-ethylendiamin-N,N',N'-triessigsäure
12. N-undecanoyl-ethylendiamin-N,N',N'-tripropionsäure

Salze dieser Säuren ergeben in 2%iger, wässriger Lösung derartig schaumarme Kühlschmiermittel, dass sie selbst bei höchstem Kühlschmiermittelumlauf und Förderdrücken bis 20 bar keine störende Schaumentwicklung mehr feststellen lassen.

Die obgenannten Verbindungen wurden nun nach dem Lochscheibenschlagverfahren nach DIN 53902, Teil 1, auf ihr Schaumverhalten geprüft, wobei Verbindungen der eingangs genannten AT-PS, nämlich die Triethanolaminsalze der N,N'-diisononanoylethylendiamin-N,N'-diessigsäure (A), bzw. der N,N'-diisononanoyl-ethylendiamin-N,N'-dipropionsäure (B) ein sehr ungünstiges Schaumverhalten zeigten.

**Tabelle 1:**

| Triethanolaminsalz der Verbindung Nr. | Konzentration (in Gew.%) | Schaumhöhe (in mm) sofort nach dem Schlagen | Schaumhöhe (in mm) nach 10 sec | Schaumhöhe (in mm) nach 20 sec | Schaumhöhe (in mm) nach 30 sec |
|---|---|---|---|---|---|
| | | | | | |
| Blindprobe | destill. Wasser | 10 | 0 | 0 | 0 |
| A | 2% | 100 | 70 | 58 | 40 |
| B | 2% | 105 | 72 | 60 | 41 |
| | | | | | |
| 1 | 2% | 13 | 2 | 0 | 0 |
| 2 | 2% | 15 | 1 | 0 | 0 |
| 3 | 2% | 15 | 2 | 0 | 0 |
| 4 | 2% | 15 | 1 | 0 | 0 |
| 5 | 2% | 15 | 2 | 0 | 0 |
| 6 | 2% | 15 | 2 | 0 | 0 |
| 7 | 2% | 12 | 0 | 0 | 0 |
| 8 | 2% | 13 | 0 | 0 | 0 |
| 9 | 2% | 16 | 3 | 0 | 0 |
| 10 | 2% | 16 | 2 | 0 | 0 |
| 11 | 2% | 17 | 4 | 0 | 0 |
| 12 | 2% | 17 | 4 | 0 | 0 |

Wie der Tabelle 1 zu entnehmen ist, ergab beispielsweise A eine Schaumhöhe unmittelbar nach dem Schlagen von 100 mm, die nach 10 sec immer noch 70 mm, nach 20 sec 58 mm betrug und erst nach 180 sec auf 7 mm zurückgegangen war. Demgegenüber zeigten die erfindungsgemässen Verbindungen ein wesentlich günstigeres Schaumverhalten.

Interessanterweise wird die Schaumwirkung anderer Salze, insbesondere solcher in der eingangs genannten AT-PS geschützten Salze, aber auch diejenige anderer, herkömmlicher, wassermischbarer Kühlschmierstoffe und Metallbearbeitungsmittel, z.B. auch von Ölemulsionen, bereits durch geringe Zusätze von nur 5 bis 40, vorzugsweise 10 bis 30 Gew.% der erfindungsgemässen Verbindungen stark reduziert. Bei Zusätzen von 50% und darüber ist die Schaumwirkung bereits nahezu ebenso gering wie bei den reinen erfindungsgemässen Substanzen.

Das Schaumverhalten von Mischungen der Triethanolaminsalze der erfindungsgemässen Säuren mit anderen Kühlschmiermitteln, wie zum Beispiel mit A oder B aus der eingangs genannten DE-C2, oder mit Syntelo® (der Firma Castrol), oder einer Mineralölemulsion Mobilmet® 151 (enthaltend Phosphorsäureester und Borsäurealkanolaminester) ist in folgender Tabelle 2 dargestellt.

**TABELLE 2:**

| Schaumhöhe (in mm) nach dem Schlagen: | | | | | | | | |
|---|---|---|---|---|---|---|---|---|
| Triethanolaminsalze der Verbindung Nr... in Mischung mit ... im Verhältnis ... | Konzentration (Gew.%) | sofort nach dem Schlagen | nach 10 sec | nach 20 sec | nach 30 sec | nach 60 sec | nach 120 sec | nach 180 sec |
| zum Vergl.:A | 2% | 100 | 70 | 58 | 40 | 26 | 12 | 7 |
| zum Vergl.:B | 2% | 105 | 72 | 60 | 41 | 26 | 13 | 8 |
| Nr.6:A=30:70 | 2 | 50 | 40 | 22 | 15 | 4 | 0 | 0 |
| Nr.6:A-50:50 | 2 | 15 | 10 | 5 | 0 | 0 | 0 | 0 |
| Nr.6:A=60:40 | 2 | 15 | 7 | 0 | 0 | 0 | 0 | 0 |
| Nr.7:B=30:70 | 2 | 40 | 28 | 16 | 7 | 0 | 0 | 0 |
| Nr.7:B-50:50 | 2 | 15 | 10 | 0 | 0 | 0 | 0 | 0 |
| Nr.7:B=60:40 | 2 | 13 | 3 | 0 | 0 | 0 | 0 | 0 |
| | | | | | | | | |
| | | sofort nach dem Schlagen | nach 60 sec | nach 120 sec | nach 180 sec | nach 4 min | nach 8 min | nach 15 min |
| C (Mobilmet®) | 3 | 250 | 200 | 180 | 150 | 120 | 50 | 10 |
| Nr.6:C-17:83 | 3,6 | 170 | 120 | 100 | 80 | 30 | 6 | 0 |
| Nr.6:C=25:75 | 4 | 120 | 85 | 40 | 18 | 0 | 0 | 0 |
| Nr.6:C=33:67 | 4,5 | 100 | 65 | 22 | 7 | 0 | 0 | 0 |
| Nr.7:C=17:83 | 3,6 | 160 | 100 | 90 | 70 | 20 | 0 | 0 |
| Nr.7:C=25:75 | 4 | 110 | 70 | 40 | 15 | 0 | 0 | 0 |
| Nr.7:C=33:67 | 4,5 | 100 | 48 | 12 | 0 | 0 | 0 | 0 |

## Patentansprüche

1. Verwendung der Alkali- und/oder Triethanolaminsalzen von Alkanoylaminocarbonsäuren der allgemeinen Formel 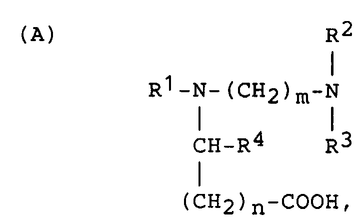 worin:
R¹ einen Alkanoyl- oder einen Alkylsulfonylrest mit jeweils 6 bis 20 Kohlenstoffatomen;
R² das Radikal 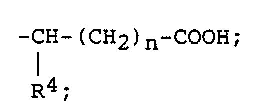
R³ das Radikal R² oder 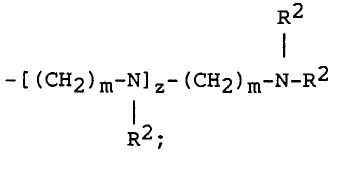
R⁴ ein H;
m = 2;
n = 0 oder 1, und
z eine ganze Zahl von 0 bis 2 bedeuten,
als Antischaummittel für wässrige Lösungen von korrosionsinhibierenden Metallbearbeitungsmitteln.

2. Verwendung nach Anspruch 1, dadurch gekennzeichnet, dass Salze von Monoalkanoyl-ethylendiamin-triessig- oder -propionsäuren, Monoalkanoyl-diethylentriamin-tetraessig- oder -propionsäuren, Monoalkanoyl-triethylentetramin-pentaessig- oder -propionsäuren, bzw. Monoalkanoyl-tetraethylenpentamin-hexa-essig- oder -propionsäuren, insbesondere von wenigstens einer der folgenden Säuren verwendet werden:
N-caproyl-ethylendiamin-N,N',N'-triessigsäure
N-caproyl-ethylendiamin-N,N',N'-tripropionsäure
N-isooctanoyl-ethylendiamin-N,N',N'-triessigsäure
N-isooctanoyl-ethylendiamin-N,N',N'-tripropionsäure
N-isononanoyl-ethylendiamin-N,N',N'-triessigsäure
N-isononanoyl-ethylendiamin-N,N',N'-tripropionsäure
N-isononanoyl-diethylentriamin-N,N',N",N"-tetraessigsäure
N-isononanoyl-diethylentriamin-N,N',N",N"-tetrapropionsäure
N-decanoyl-ethylendiamin-N,N',N'-triessigsäure
N-decanoyl-ethylendiamin-N,N',N'-tripropionsäure
N-undecanoyl-ethylendiamin-N,N',N'-triessigsäure
N-undecanoyl-ethylendiamin-N,N',N'-tripropionsäure.

## Claims

1. Use of the alkali metal salts and/or triethanolamine salts of alkanoylaminocarboxylic acids of the general formula 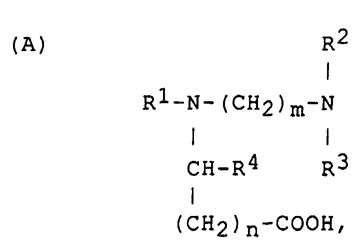 in which
R¹ denotes an alkanoyl or an alkanesulfonyl radical, each having 6 to 20 carbon atoms,
R² denotes the radical 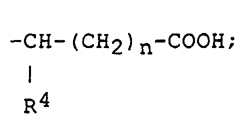
R³ denotes the radical R² or 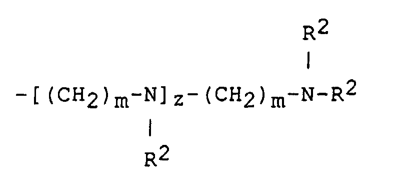
R⁴ denotes a hydrogen;
m denotes 2;
n denotes an integer from 0 to 1, and
z denotes an integer from 0 to 2;
as antifoaming agents for aqueous solutions of corrosion-inhibiting metal working compositions.

2. Use according to Claim 1, characterized in that salts of monoalkanoylethylenediaminetriacetic or monoalkanoylethylenediaminetripropionic acids, monoalkanoyldiethylenetriaminetetraacetic or monoalkanoyldiethylenetriaminetetrapropionic acids, monoalkanoyltriethylenetetraminepentaacetic or monoalkanoyltriethylenetetraminepentapropionic acids or monoalkanoyltetraethylenepentaminehexaacetic or monoalkanoyltetraethylenepentaminehexapropionic acids, in particular of one of the following acids, are used:
N-caproylethylenediamine-N,N',N'-triacetic acid
N-caproylethylenediamine-N,N',N'-tripropionic acid
N-isooctanoylethylenediamine-N,N',N'-triacetic acid
N-isooctanoylethylenediamine-N,N',N'-tripropionic acid
N-isononanoylethylenediamine-N,N',N'-triacetic acid
N-isononanoylethylenediamine-N,N',N'-tripropionic acid
N-isononanoyldiethylenetriamine-N,N",N",N"-tetraacetic acid
N-isononanoyldiethylenetriamine-N,N",N",N"-tetrapropionic acid
N-decanoylethylenediamine-N,N',N'-triacetic acid
N-decanoylethylenediamine-N,N',N'-tripropionic acid
N-undecanoylethylenediamine-N,N',N'-triacetic acid
N-undecanoylethylenediamine-N,N',N'-tripropionic acid.

## Revendications

1. Utilisation de sels de métaux alcalins et/ou de la triéthanolamine avec les acides alcanoyl-amino-carboxyliques de la formule générale 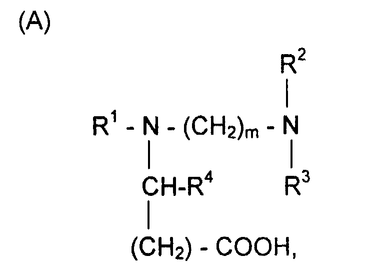 dans laquelle
R¹ est un résidu alcanoyle ou un résidu alkylsulfonyle avec chaque fois 6 à 20 atomes de carbone ;
R² est un radical 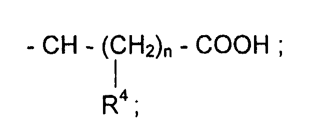
R³ est le radical R² ou 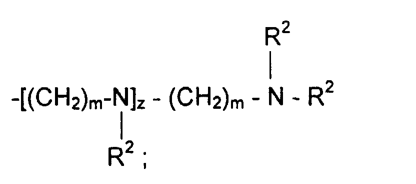
R⁴ est un H ;
m = 2 ;
n = 0 ou 1, et
z est un nombre entier de 0 à 2,
comme agent antimousse pour des solutions aqueuses de milieux inhibiteurs de corrosion destinés à l'usinage de métaux.

2. Utilisation selon la revendication 1, caractérisée en ce que l'on utilise un sel de l'acide monoalcanoyle éthylène diamine triacétique ou propionique, de l'acide monoalcanoyle diéthylène triamine tétraacétique ou propionique, de l'acide monoalcanoyle triéthylène tétramine pentaacétique ou propionique, de l'acide monoalcanoyle tétraéthylène pentamine hexacétique ou propionique et, en particulier d'au moins un des acides suivants :
l'acide N-caproyle éthylène diamine-N,N',N'-triacétique,
l'acide N-caproyle éthylène diamine-N,N',N'-tripropionique,
l'acide N-isooctanoyle éthylène diamine-N,N',N'-triacétique,
l'acide N-isooctanoyle éthylène diamine-N,N',N'-tripropionique,
l'acide N-isononanoyle éthylène diamine-N,N',N'-triacétique,
l'acide N-isononanoyle éthylène diamine-N,N',N'-tripropionique,
l'acide N-isononanoyle diéthylène triamine N,N',N ",N"-tétraacétique,
l'acide N-isononanoyle diéthylène triamine N,N',N ",N"-tétrapropionique,
l'acide N-décanoyle éthylène diamine-N,N',N'-triacétique,
l'acide N-décanoyle éthylène diamine-N,N',N'-tripropionique,
l'acide N-undécanoyle éthylène diamine-N,N',N'-triacétique,
et de l'acide N-undécanoyle éthylène diamine-N,N',N'-tripropionique.
